# EUROPÄISCHE PATENTSCHRIFT

(11) **EP 0 794 743 B1**
(45) Veröffentlichungstag und Bekanntmachung des Hinweises auf die Patenterteilung: **13.01.1999**
(21) Anmeldenummer: 95929885.2
(22) Anmeldetag: 16.08.1995
(51) Int. Cl.: A61C 17/34, A61C 17/26, A61C 17/40

(54) **BÜRSTENTEIL FÜR EINE ELEKTRISCHE ZAHNBÜRSTE**
HEAD FOR AN ELECTRIC TOOTHBRUSH
ELEMENT DE BROSSAGE POUR UNE BROSSE A DENTS ELECTRIQUE

(30) Priorität: 29.10.1994 DE 4438732
(43) Veröffentlichungstag der Anmeldung: 17.09.1997
(73) Patentinhaber: Braun Aktiengesellschaft, Frankfurt am Main (DE)
(72) Erfinder: HILFINGER, Peter, D-61350 Bad Homburg (DE); HERZOG, Karl, D-60489 Frankfurt am Main (DE); KRESSNER, Gerhard, D-63674 Altenstadt (DE)
(86) Internationale Anmeldenummer: EP9503255
(87) Internationale Veröffentlichungsnummer: WO9613224

(56) Entgegenhaltungen:
- WO-A-94/12121
- DE-A- 3 931 982

## Beschreibung

Die Erfindung betrifft ganz allgemein eine elektrische Zahnbürste und insbesondere ein Bürstenteil für eine elektrische Zahnbürste nach den Merkmalen des Oberbegriffs des Patentanspruchs 1.

Ein derartiges Bürstenteil ist aus der WO 94/12121, insbesondere Fig. 5 bekannt. Die Achse des Bürstenteils nach dem Stand der Technik ist mittels einer Lagerkugel in einem Kalottenlager gelagert. Hieraus folgt, daß die Achse um einen Schwenkpunkt schwenkbar ist. Des weiteren ist eine Stange zum Antrieb des Bürstenteils innerhalb einer Bohrung einer Welle in axialer Richtung fixiert. Somit kann die Stange sich zwar um ihre eigene Achse drehen, nicht aber in axialer Richtung verschoben werden. Wird die Welle in eine alternierende oder rotierende Drehbewegung versetzt, so hat dies eine alternierende Drehbewegung des Borstenträgers zur Folge. Durch die axiale Fixierung der Stange in der Bohrung kann jedoch der sich andauernd ändernde Abstand zwischen einem Stift des Bürstenteils und dem Wellenstück nicht ausgeglichen werden, so daß der gesamte Borstenträger diesen sich ändernden Abstand ausgleichen muß. Dies wird mit Hilfe der schwenkbaren Lagerung der Achse dadurch ermöglicht, daß der Borstenträger um einen Schwenkpunkt hin- und herschwenkt. Der Borstenträger führt damit insgesamt eine alternierende Dreh- und Taumelbewegung aus.

Ein weiteres Bürstenteil ist aus der deutschen Offenlegungsschrift DE 39 37 850 A1 bekannt. Dort ist eine elektrische Zahnbürste beschrieben, die ein Griffteil aufweist, aus dem eine Antriebswelle herausragt. In dem Griffteil sind elektrische Antriebsmittel untergebracht, mit deren Hilfe die Antriebswelle in eine oszillierende Drehbewegung um ihre Längsachse versetzt werden kann. Auf das Griffteil und die Antriebswelle kann ein in Richtung der Längsachse sich erstreckendes Bürstenteil aufgesteckt werden, das ein Trägerrohr aufweist, an dessen Ende ein Borstenträger angeordnet ist. In dem Trägerrohr ist eine Welle untergebracht, die im aufgesteckten Zustand mit der Antriebswelle gekoppelt ist. Von dem Borstenträger stehen Borsten ab, die etwa quer zur Längsachse des Bürstenteils angeordnet sind. Mit Hilfe eines Kegelradgetriebes wird die von der Antriebswelle auf die Welle des Bürstenteils übertragene oszillierende Drehbewegung um etwa 90 Grad umgelenkt. Dies hat zur Folge, daß der Borstenträger im eingeschalteten Zustand der elektrischen Zahnbürste eine oszillierende Drehbewegung um eine etwa quer zur Längsachse des Bürstenteils angeordnete Achse ausführt. Die von den freien Enden der Borsten gebildete Reinigungsfläche führt ebenfalls eine oszillierende Drehbewegung auf den Zahnflächen der Zähne des Benutzers aus. Mit dieser oszillierenden Drehbewegung ist bereits eine gute Reinigung der Zahnflächen erreichbar.

Aufgabe der Erfindung ist es, ein Bürstenteil für eine elektrische Zahnbürste zu schaffen, mit dem eine verbesserte Zahnreinigung erreichbar ist.

Entsprechend der Erfindung wird diese Aufgabe bei einem Bürstenteil der eingangs genannten Art durch die Merkmale des Patentanspruchs 1 gelöst.

Durch die Nutationsbewegung des Borstenträgers, das heißt, der Bewegung der Bürstenachse auf einem Kegelmantel, führen die freien Enden der Borsten kurze Hub- oder Stoßbewegungen in einer Richtung mehr oder weniger parallel zu den Borsten bzw. der Bürstenachse aus. Dies bedeutet, daß die freien Enden der Borsten nicht dauernd auf den zu reinigenden Zahnflächen eines Benutzers mit gleichbleibender Kraft aufgesetzt sind, sondern abwechselnd mit einer größeren oder einer kleineren Aufsetzkraft auf die Zahnflächen hin- bzw. von diesen wegbewegt werden, also eine Art Stoßbewegung ausüben. Es hat sich herausgestellt, daß mit einer derartigen Bewegung der Bürste eine wesentlich bessere Reinigungswirkung bei der Zahnreinigung erreicht werden kann. Dabei ist es nicht erforderlich, daß der Benutzer das Bürstenteil zu den Zahnflächen oder insbesondere zu den Interdentalflächen ausrichtet. Durch die Nutationsbewegung wird unabhängig von der Ausrichtung eine verbesserte Reinigung der Zahnflächen und auch der Interdentalflächen erreicht. Die Hub- oder Stoßbewegungen der freien Enden der Borsten bewirken des weiteren eine sehr gleichmäßige Reinigung der Zahnflächen, was der Anwendung durch den Benutzer und dem Komfort für den Benutzer entgegenkommt. Bevorzugt wird die Bewegung der Bürstenachse auf dem Mantel eines Kreiskegels erfolgen, es liegt jedoch auf der Hand, daß auch andere Kegelformen mit elliptischer oder sonstiger Grundfläche in Betracht kommen. Solche Varianten liegen im Rahmen der Erfindung. Von Bedeutung ist lediglich, daß die Borsten aufgrund der erfindungsgemäßen Bewegung eine Bewegungskomponente in Richtung der Flächennormalen der Zahnflächen besitzen. Unter Umständen kann auf eine zusätzliche, überlagerte Rotation oder Oszillation der Bürste um die Bürstenachse gänzlich verzichtet werden, wenngleich auch eine erzwungene Drehbewegung der Bürste um die Bürstenachse von Vorteil sein kann. Die erfindungsgemäße Bewegung des Borstenträgers wird durch den spitzen Winkel zwischen der Querachse und der Borstenachse erreicht. Die Bürstenachse und somit auch der Borstenträger bewegen sich auf einem Kegelmantel eines Kegels, dessen Mittelachse von der Querachse gebildet wird. Die Nutationsbewegung wird somit auf eine einfache Weise erzeugt, die nur einen geringen Aufwand an Bauteilen erfordert.

Eine besonders vorteilhafte Ausgestaltung der Erfindung nach dem Patentanspruch 2 besteht darin, daß der Scheitelpunkt des Kegelmantels außerhalb des Borstenfeldes liegt. Dies bewirkt, daß die Hub- und Stoßbewegungen der freien Enden der Borsten die zu reinigenden Zahnflächen von allen Seiten umhüllen. Bei einer alternativen vorteilhaften Ausgestaltung der Erfindung nach dem Patentanspruch 4 kann der Scheitelpunkt des Kegelmantels auch innerhalb des Borstenfeldes, aber in der Nähe der Zahnoberfläche liegen. Besonders zweckmäßig ist es dabei, den Winkel zwischen der Querachse und der Borstenachse aus dem im Patentanspruch 5 angegebenen Wertebereich auszuwählen. Insbesondere hat sich ein Winkel von etwa 6 bis 3 Grad für eine Anordnung des Scheitelpunkts innerhalb des Zahns oder ein Winkel von etwa 10 bis 5 Grad für eine Anordnung des Scheitelpunkts außerhalb des Zahns als vorteilhaft herausgestellt.

Bei einer Weiterbildung der Erfindung nach dem Patentanspruch 6 wird die Drehbewegung der Welle in einfacher Weise mit Hilfe eines Ritzels und eines Kronenrads in eine Drehbewegung um die Querachse umgesetzt. Es versteht sich, daß hier auch andere Umsetzungen möglich sind, beispielsweise mittels eines Kegelradpaares.

Bei einer vorteilhaften Ausgestaltung der Erfindung ist nach dem Patentanspruch 7 das Ritzel mit einem Lagerstift verbunden, der im Trägerrohr drehbar gelagert ist. Des weiteren ist gemäß dem Patentanspruch 9 das Kronenrad mit einer Keilscheibe verbunden, in der ein weiterer Lagerstift gehalten ist. Dieser dient entsprechend dem Patentanspruch 10 dazu, den Borstenträger drehbar zu lagern. Dabei ist der erstgenannte Lagerstift in der Querachse und der zweitgenannte Lagerstift in der Bürstenachse angeordnet, so daß die beiden Lagerstifte den in Patentanspruch 2 genannten spitzen Winkel einschließen. Diese Ausgestaltung stellt eine einfache und kostengünstige Möglichkeit dar, mit wenig Bauteilen die erfindungsgemäße Taumelbewegung zu erzeugen.

Bei einer alternativen vorteilhaften Ausgestaltung der Erfindung ist nach dem Patentanspruch 8 eine gekröpfte Welle, die auch als Kurbelwelle ausgebildet sein kann, vorgesehen. Diese ist einerseits in dem Trägerrohr sowie andererseits gemäß dem Patentanspruch 10 in dem Borstenträger drehbar gelagert. Dazwischen kann entsprechend dem Patentanspruch 9 eine Keilscheibe angeordnet sein. Die Welle ist dabei derart gebogen, daß ihre beiden Enden den in Patentanspruch 2 genannten spitzen Winkel zueinander einnehmen. Insbesondere die Verwendung der gekröpften Welle hat zur Folge, daß nur wenige Bauteile erforderlich sind, die auf einfache Weise zusammengebaut werden können. Die beschriebene Ausgestaltung ist deshalb insbesondere hinsichtlich der Herstellung des Bürstenteils sehr kostengünstig.

Bei einer vorteilhaften Weiterbildung der Erfindung nach dem Patentanspruch 11 wird eine Eigenrotation des Borstenträgers verhindert. Dies hat zur Folge, daß nur die erfindungsgemäße Taumelbewegung, also die Hub- oder Stoßbewegungen der freien Enden der Borsten die Reinigung der Zahnflächen bewirken.

Nach dem Patentanspruch 12 wird die Eigenrotation des Borstenträgers durch eine in Richtung der Längsachse verlaufende Nut im Trägerrohr verhindert, in die ein Finger des Borstenträgers eingreift. Es sind somit keine weiteren Bauteile erforderlich, sondern die Eigenrotation wird durch eine spezielle Ausgestaltung der vorhandenen Bauteile verhindert.

Nach dem Patentanspruch 13 ist zur Verhinderung der Eigenrotation des Borstenträgers eine Haltefeder, ein Gelenkhebel oder dgl. vorgesehen. Diese Bauteile haben den Vorteil, daß keinerlei Behinderung der erfindungsgemäßen Nutationsbewegung des Borstenträgers durch Reibung entstehen kann, und daß auch eine Verschmutzung zum Beispiel mit Zahnpastaresten keinerlei Folgen für die Funktionsfähigkeit des Bürstenteils hat. Ein weiterer Vorteil besteht darin, daß die durch die Nutationsbewegung entstehende Relativbewegung des Trägerrohrs und des Borstenträgers zueinander in einfacher Weise ausgeglichen wird, also ohne sonstige besondere Vorkehrungen oder sonstigen besonderen Aufwand.

Eine besonders einfache Ausgestaltung der Haltefeder ist in Patentanspruch 14 angegeben. Die dortige Haltefeder verursacht hinsichtlich ihrer Herstellung nur geringe Kosten. Des weiteren ist es besonders zweckmäßig, entsprechend dem Patentanspruch 15 einen Metalldraht als Haltefeder zu verwenden. Dadurch ist es möglich, die Haltefeder durch einfaches Einstecken mit dem Trägerrohr und dem Borstenträger zu verbinden.

Bei einer vorteilhaften Weiterbildung der Erfindung nach dem Patentanspruch 16 wird eine Eigenrotation des Borstenträgers hervorgerufen. Dies hat zur Folge, daß nicht nur die erfindungsgemäße Taumelbewegung, also die Hub- oder Stoßbewegungen der freien Enden der Borsten zur Reinigung der Zahnflächen beitragen, sondern zusätzlich auch noch eine Drehbewegung der von den freien Enden der Borsten gebildeten Reinigungsfläche eine Reinigungswirkung hervorruft.

Nach dem Patentanspruch 17 wird eine Eigenrotation des Borstenträgers durch einander zugeordnete Kegelradverzahnungen am Trägerrohr und am Borstenträger erzeugt. Die Drehgeschwindigkeit dieser Eigenrotation insbesondere im Hinblick auf die Drehgeschwindigkeit der erfindungsgemäßen Taumelbewegung kann dabei in einfacher Weise durch die Wahl des Zähneverhältnisses der Kegelradverzahnungen beeinflußt werden.

Sind weder Mittel zur Verhinderung, noch Mittel zur Erzeugung einer Eigenrotation des Borstenträgers vorgesehen, so kann der Borstenträger aufgrund seiner drehbaren Lagerung Drehbewegungen, insbesondere eine Rotation oder Oszillation ausführen, die jedoch unkontrolliert sind und von der Art und Weise abhängen, wie der Benutzer die Borsten auf die Zahnflächen aufsetzt.

Bei einer vorteilhaften Weiterbildung der Erfindung nach dem Patentanspruch 18, sind die einander zugeordneten Flächen des Borstenträgers einerseits und die Flächen des Trägerrohrs sowie gegebenenfals weiterer erforderlicher Flächen andererseits gleichartig gewölbt. Insbesondere ist es nach dem Patentanspruch 19 besonders zweckmäßig, die genannten Flächen kugelförmig auszugestalten, wobei ein gemeinsamer Kugelmittelpunkt vorhanden ist. Durch diese Ausgestaltung entsteht ein konstanter Abstand zwischen den einander zugeordneten Flächen des Trägerrohrs und des Borstenträgers, der auch bei der Bewegung erhalten bleibt. Insbesondere durch eine Anordnung des Kugelmittelpunkts im Scheitelpunkt entsprechend dem Patentanspruch 20 wird verhindert, daß die einander zugeordneten Flächen des Trägerrohrs und des Borstenträgers eine sich öffnende und wieder schließende Bewegung ausführen, die ein Einklemmen von Speiseresten oder gar von Hautteilen des Benutzers zur Folge haben könnten.

Aus dem Patentanspruch 21 geht hervor, daß die Erfindung nicht nur in der Form des Bürstenteils als solchem verwirklicht sein kann, sondern auch in der Form einer elektrischen Zahnbürste, auf die ein entsprechendes Bürstenteil beispielsweise aufgesteckt ist.

Besonders vorteilhaft ist es, wenn die elektrische Zahnbürste gemäß dem Patentanspruch 22 einen kontinuierlich rotierenden Antrieb aufweist. Auf diese Weise wird eine gleichförmig umlaufende Taumelbewegung des Borstenträgers erreicht. Grundsätzlich ist es aber auch möglich, daß die elektrische Zahnbürste mit einem oszillierenden Antrieb versehen ist.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind.

Es zeigt:
- Fig. 1: eine schematische Darstellung eines Längsschnitts durch ein erstes Ausführungsbeispiel eines Bürstenteils für eine elektrische Zahnbürste,
- Fig. 2: eine schematische Darstellung eines Längsschnitts durch ein zweites Ausführungsbeispiel eines Bürstenteils für eine elektrische Zahnbürste,
- Fig. 3: eine schematische Darstellung eines Längsschnitts durch ein drittes Ausführungsbeispiel eines Bürstenteils für eine elektrische Zahnbürste entlang der Ebene C - C der Fig. 4,
- Fig. 4: eine schematische Darstellung eines Längsschnitts durch das Bürstenteil der Fig. 3 entlang der Ebene A - A der Fig. 3,
- Fig. 5: eine schematische Darstellung eines Querschnitts durch das Bürstenteil der Fig. 3 entlang der Ebene B - B der Fig. 3,
- Fig. 6: eine schematische Darstellung der in dem Bürstenteil nach der Fig. 3 verwendeten Haltefeder in drei verschiedenen Darstellungen,
- Fig. 7: eine schematische Darstellung eines Längsschnitts durch ein viertes Ausführungsbeispiel eines Bürstenteils für eine elektrische Zahnbürste, sowie
- Fig. 8: eine schematische Darstellung eines Längsschnitts durch ein fünftes Ausführungsbeispiel eines Bürstenteils für eine elektrische Zahnbürste.

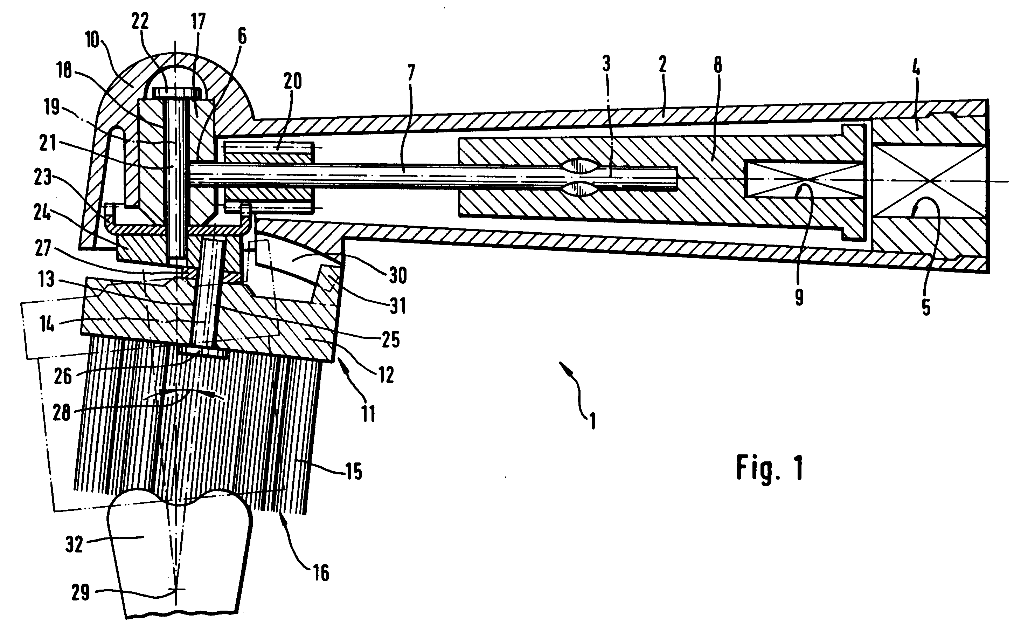

Die anhand der Fign. 1 bis 8 nachfolgend beschriebenen Bürstenteile sind geeignet zum Betrieb mit einer elektrischen Zahnbürste, wie sie in der deutschen Offenlegungsschrift DE 39 37 850 A1 offenbart ist. Der in der genannten Offenlegungsschrift erläuterte oszillierende Antrieb der elektrischen Zahnbürste kann jedoch erfindungsgemäß vorzugsweise durch einen kontinuierlich rotierenden Antrieb ersetzt, wobei beide Rotationsrichtungen möglich sind. Es wird jedoch darauf hingewiesen, daß die Erfindung auf der Grundlage eines oszillierenden Antriebs der elektrischen Zahnbürste ebenfalls realisierbar ist.

Die elektrische Zahnbürste weist ein Griffteil auf, aus dem eine Antriebswelle herausragt. In dem Griffteil sind elektrische Antriebsmittel untergebracht, die die Antriebswelle im eingeschalteten Zustand in eine Rotation um ihre Längsachse versetzen. Die Antriebswelle und dasjenige Ende des Griffteils, aus dem die Antriebswelle herausragt, sind mit Außenkonturen zum Aufstecken eines Bürstenteils und zum Übertragen der erzeugten Rotation versehen.

In der Fig. 1 ist ein Bürstenteil 1 dargestellt, das auf das Griffteil und die Antriebswelle der obigen elektrischen Zahnbürste aufgesteckt werden kann. Das Bürstenteil 1 weist ein Trägerrohr 2 auf, das sich in Richtung einer Längsachse 3 erstreckt. Das Trägerrohr 2 ist an seinem dem Griffteil zugewandten freien Ende mit einem Profilring 4 versehen, der eine Innenkontur 5 besitzt, die zu der Außenkontur des Griffteils komplementär ist. Auf diese Weise kann das Bürstenteil 1 drehfest auf das Griffteil aufgesteckt werden.

An seinem dem Griffteil abgewandten Ende ist innerhalb des Trägerrohrs 2 eine Bohrung 6 vorgesehen, in der eine Welle 7 drehbar gelagert ist. Die Welle 7 ist in der Längsachse 3 des Trägerrohrs 2 angeordnet und besteht vorzugsweise aus Metall. Die Welle 7 erstreckt sich ausgehend von der Bohrung 6 in der dem Griffteil zugewandten Richtung etwa bis zur Mitte des Trägerrohrs 2. In der dem Griffteil zugewandten Richtung ist die Welle 7 mit einer weiteren Welle 8 fest verbunden, die in der Längsachse 3 angeordnet ist und vorzugsweise aus Kunststoff besteht. Die weitere Welle 8 besitzt an ihrem dem Griffteil zugewandten freien Ende eine Innenkontur 9, die zu der Außenkontur der aus dem Griffteil herausragenden Antriebswelle komplementär ist. Auf diese Weise kann die Antriebswelle drehfest mit der weiteren Welle 8 und damit auch mit der Welle 7 verbunden werden.

Bei den Innen- und Außenkonturen 5, 9 kann es sich - im Querschnitt gesehen - um quadratische, sternförmige oder ähnliche Konturen handeln, die derart aneinander angepaßt sind, daß einerseits ein einfaches Aufstecken und Abziehen des Bürstenteils 1 vom Griffteil durch einen Benutzer möglich ist, daß aber andererseits auch der sichere Sitz des Bürstenteils 1 auf dem Griffteil gewährleistet ist.

An seinem dem Griffteil abgewandten Ende ist an das Trägerrohr 2 eine Schale 10 angebracht. Im Bereich dieser Schale 10 sind des weiteren ein Borstenträger 11 sowie Mittel zur Kopplung des Borstenträgers 11 mit der Welle 7 und dem Trägerrohr 2 angeordnet.

Der Borstenträger 11 weist eine scheibenförmige Platte 12 sowie eine durchgehende Bohrung 13 auf und ist im wesentlichen rotationssymmetrisch zu einer Bürstenachse 14 ausgestaltet. Auf ihrer der Welle 7 abgewandten Seite ist die Platte 12 mit einer Vielzahl von Borsten 15 versehen, die in einer zur Bürstenachse 14 etwa parallelen Richtung von der Platte 12 abstehen. Die Borsten 15 können bevorzugt etwa gleich lang sein, so daß deren freie Enden eine etwa kreisförmige Reinigungsfläche 16 bilden. Die Bohrung 13 in der Platte 12 ist etwa parallel zur Bürstenachse 14 ausgerichtet und zielt etwa in den Mittelpunkt der Reinigungsfläche 16.

Die Bohrung 6 ist in eine Lagerbuchse 17 eingebracht, die des weiteren eine durchgehende Bohrung 18 quer zur Bohrung 6 aufweist. Die Bohrung 6 ist somit etwa parallel zur Längsachse 3 ausgerichtet, während die Bohrung 18 etwa parallel zu einer dazu rechtwinkligen Querachse 19 angeordnet ist. Die in der Bohrung 6 gelagerte Welle 7 reicht nicht in den Bereich der Bohrung 18.

In der unmittelbaren Nähe der Bohrung 6 trägt die Welle 7 ein Ritzel 20, das drehfest mit der Welle 7 verbunden ist. Es versteht sich, daß anstelle des Ritzels 20 auch ein Kronenrad, ein Kegelrad oder dergleichen vorgesehen sein kann.

In der Bohrung 18 ist ein Lagerstift 21 drehbar gelagert, der an seinem dem Borstenträger 11 abgewandten Ende mit einem Kopf oder einer Scheibe 22 gegen Herausfallen gesichert ist. Mit dem Lagerstift 21 ist auf der dem Borstenträger zugewandten Seite der Lagerbuchse 17 ein Kronenrad 23 drehfest verbunden. Dies wird beispielsweise dadurch erreicht, daß das Kronenrad 23 auf den Lagerstift 21 mit einer Preßpassung aufgesteckt ist. Das Ritzel 20 und das Kronenrad 23 kämmen miteinander. Es versteht sich, daß anstelle dieser Getriebebauteile auch andere Bauteile vorgesehen sein können, so zum Beispiel ein Kegelrad oder dergleichen. Des weiteren ist mit dem Lagerstift 21 eine Keilscheibe 24 drehfest verbunden, wobei der Lagerstift 21 etwa im Mittelpunkt der Keilscheibe 24 in diese beispielsweise eingepreßt ist. Das Getriebe kann aus Metall oder Kunststoff bestehen. Im letztgenannten Fall ist es zweckmäßig, die Wellen 7, 8 und das Ritzel 20, sowie Kronenrad 23 und Keilscheibe 24 als einstückiges Spritzgußteil zu fertigen.

Exzentrisch zum Lagerstift 21 ist in der Keilscheibe 24 ein weiterer Lagerstift 25 drehfest gehalten, beispielsweise eingepreßt. Dieser Lagerstift 25 dient der drehbaren Lagerung des Borstenträgers 11, indem er in der Bohrung 13 der Platte 12 aufgenommen ist. Der Lagerstift 25 ist somit in der Bürstenachse 14 angeordnet. An seinem der Keilscheibe 24 abgewandten Ende weist der weitere Lagerstift 25 eine Scheibe 26 bzw. einen Kopf auf, welche ein Herausfallen des Borstenträgers 11 verhindern.

Zur Verminderung der Reibung zwischen der Keilscheibe 24 und der Platte 12 trägt der weitere Lagerstift 25 zwischen den genannten Bauteilen eine Lagerscheibe 27 oder dergleichen. Diese Lagerscheibe 27 kann jedoch auch entfallen.

Der Lagerstift 21 und damit die Querachse 19 sind etwa rechtwinklig zu der ihnen zugewandten Oberfläche der Keilscheibe 24 angeordnet, während der weitere Lagerstift 25 und damit die Bürstenachse 14 etwa rechtwinklig zu der ihnen zugewandten, anderen Oberfläche der Keilscheibe 24 angeordnet sind. Die Keilscheibe 24 ist somit derart ausgestaltet, daß ihre Oberflächen in einem Winkel 28 zueinander angeordnet sind. Dies hat zur Folge, daß auch die beiden Lagerstifte 21, 25 und damit die Querachse 19 und die Bürstenachse 14 den genannten Winkel 28 miteinander einschließen. Der Winkel 28 geht dabei von einem Scheitelpunkt 29 aus, in dem sich die Querachse 19 und die Bürstenachse 14 schneiden.

Auf der dem Borstenträger 11 zugewandten Seite des Trägerrohrs 2 ist eine Nut 30 vorgesehen, die ausgehend von der Querachse 19 in Längsrichtung angeordnet ist. Des weiteren steht von dem Borstenträger 11 ein Finger 31 ab, der in die Nut 30 eingreift und in dieser hin- und hergleiten kann.

Im eingeschalteten Zustand der elektrischen Zahnbürste wird die Welle 7 und damit auch das Ritzel 20 des auf das Griffteil aufgesteckten Bürstenteils 1 von der aus dem Griffteil herausragenden Antriebswelle in eine Rotation bzw. gegebenenfalls Oszillation um die Längsachse 3 versetzt. Dies hat zur Folge, daß der Lagerstift 21 und das Kronenrad 23 ebenfalls eine Rotation bzw. Oszillation um die Querachse 19 ausführen. Dadurch wird die drehfest mit dem Kronenrad 23 verbundene Keilscheibe 24 und der in der Bürstenachse 14 angeordnete weitere Lagerstift 25 in eine Rotation bzw. Oszillation um die Querachse 19 versetzt. Der auf dem Lagerstift 25 gelagerte Borstenträger 11 führt diese Bewegung um die Querachse 19 ebenfalls aus. Durch die Anordnung der Querachse 19 und der Borstenachse 14 unter dem Winkel 28 bewegt sich der Lagerstift 25 und damit auch die Bürstenachse 14 auf einem Kegelmantel um die Querachse 19. Der Öffnungswinkel des Kegelmantels hat dabei den doppelten Wert des Winkels 28, die Spitze des Kegelmantels liegt im Scheitelpunkt 29. Insgesamt führt somit der Borstenträger 11 eine Nutationsbewegung um die Querachse 19 aus. Dies bedeutet, daß die die Reinigungsfläche 16 des Borstenträgers 11 bildenden freien Enden der Borsten 15 in eine Hub- oder Stoßbewegung versetzt werden, wobei die Richtung dieser Hub- oder Stoßbewegungen im wesentlichen parallel zu den Borsten und damit etwa parallel zu der Bürstenachse 14 ausgerichtet ist. Werden die Borsten 15 von einem Benutzer einem zu reinigenden Zahn 32 zugeordnet, so wirken die Hub- oder Stoßbewegungen in Richtung der Zahnflächen dieses Zahns 32 und sorgen für eine besonders wirksame Reinigung der Zähne von Plaque und dgl.

Durch den in die Nut 30 eingreifenden Finger 31 wird eine Eigenrotation des Borstenträgers 11 verhindert. Dabei führt während der Nutationsbewegung des Borstenträgers 11 der Finger 31 in der Nut 30 eine Hin- und Herbewegung aus.

Bei dem Bürstenteil 1 nach der Fig. 1 beträgt der Winkel 28 etwa 6 Grad, bevorzugt 3 Grad. Der Scheitelpunkt 29 ist dabei etwa im Bereich des Zahns 32 angeordnet ist. Auf diese Weise werden die zu reinigenden Zahnflächen allseitig von den beschriebenen Hub- oder Stoßbewegungen der Borsten 15 erfaßt.

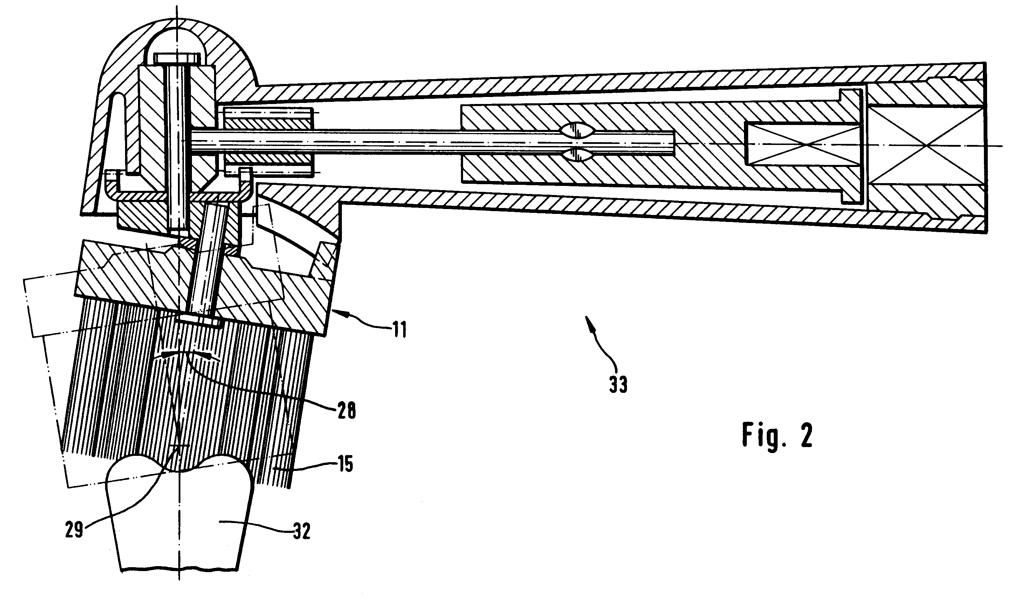

Im Unterschied dazu beträgt der Winkel 28 bei dem Bürstenteil 33 der Fig. 2 etwa 10 Grad, bevorzugt 5 Grad. Ein Scheitelpunkt 29 liegt in diesem Ausführungsbeispiel außerhalb des Zahns 32, ist aber in dessen Nähe angeordnet.

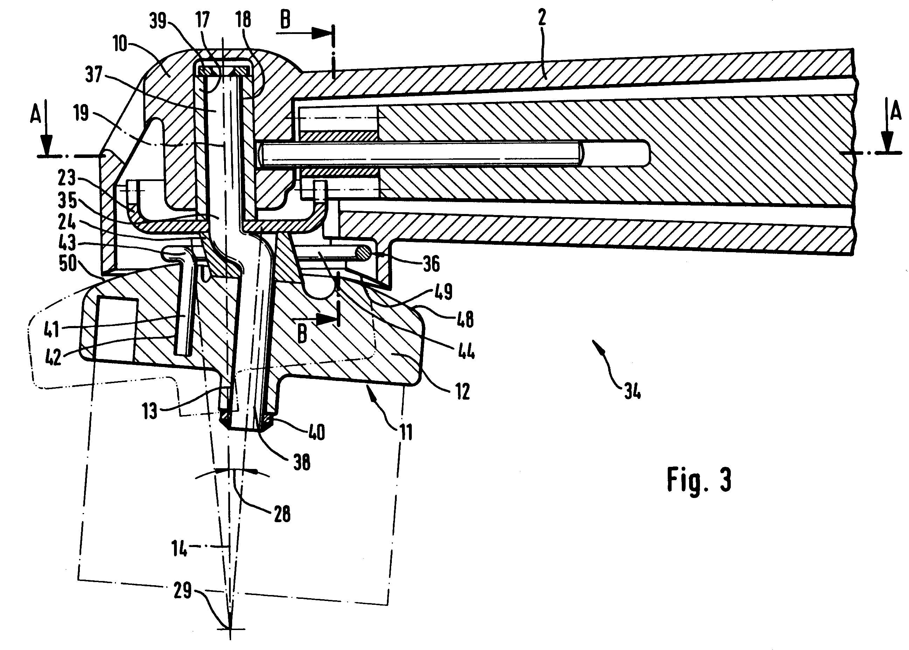

Das in den Fign. 3 bis 6 dargestellte Bürstenteil 34 weist unter anderem die folgenden wesentlichen Unterschiede zu den anhand der Fign. 1 und 2 beschriebenen Bürstenteilen 1, 33 auf. Zum einen sind die beiden Lagerstifte 21, 25 durch eine gekröpfte Welle 35 ersetzt, und zum anderen ist anstelle der Nut 30 und des Fingers 31 eine Haltefeder 36 vorgesehen. Natürlich können anstelle der Haltefeder auch andere Bauteile, so z. B. Gelenkhebel, Schnüre oder sonstige Elastomerteile verwendet werden.

Gemäß Fig. 3 weist die Welle 35 einen Bereich 37 auf, der in der Bohrung 18 der Lagerbuchse 17 in der Querachse 19 angeordnet und dort drehbar gelagert ist. Dieser Bereich 37 der Welle 35 trägt das Kronenrad 23, das drehfest mit der Welle 35 verbunden ist. Die Kröpfung der Welle 35 ist im Bereich der Keilscheibe 24 angeordnet, so daß diese ebenfalls drehfest mit der Welle 35 verbunden ist. Des weiteren weist die Welle 35 einen Bereich 38 auf, der in der Bohrung 13 der Platte 12 in der Bürstenachse 14 angeordnet und dort drehbar gelagert ist. Die beiden freien Enden der Welle 35 sind mit Scheiben 39, 40 versehen, die jeweils ein Herausfallen verhindern. Die Welle 35 ist vorzugsweise aus einem gebogenen Stück Rundmetall hergestellt.

Durch die Kröpfung der Welle 35 schließen die beiden Bereiche 37, 38 den Winkel 28 ein, der dazu führt, daß im eingeschalteten Zustand der Borstenträger 11 eine Art Taumelbewegung bzw. Nutationsbewegung ausführt.

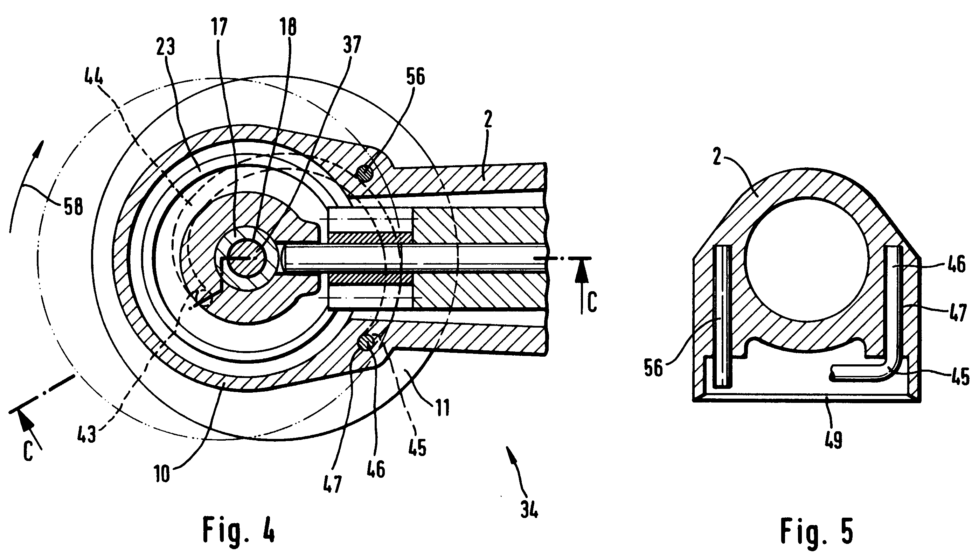

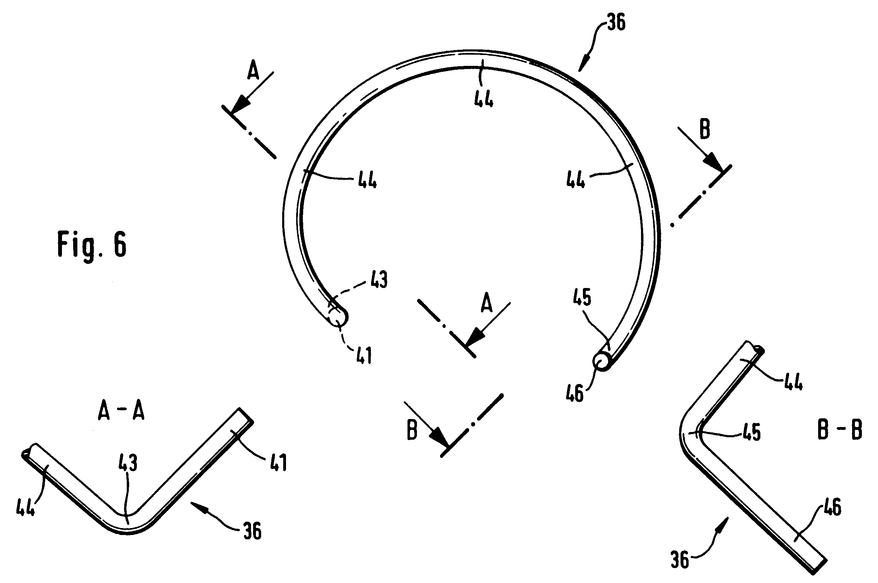

Die Haltefeder 36 besteht aus einem Metalldraht und verbindet den Borstenträger 11 mit dem Trägerrohr 2. Insbesondere aus einer Zusammenschau der Fign. 3 bis 6 kann die Gestalt der Haltefeder 36 entnommen werden. So ist insbesondere aus der Fig. 3 zu entnehmen, daß ein Bereich 41 der Haltefeder 36 in ein Sackloch 42 der Platte 12 des Borstenträgers 11 eingesteckt ist. Danach folgt, wie insbesondere die Fig. 6 zeigt, eine etwa rechtwinklige Biegung 43, nach der die Haltefeder 36 in einen Federbereich 44 übergeht. Dieser besitzt entsprechend den Fign. 4 und 6 eine bogenförmige Gestalt mit sich änderndem Radius. Am anderen Ende des Federbereichs 44 ist eine etwa rechtwinklige Biegung 45 vorgesehen, und zwar derart, daß der nachfolgende Bereich 46 in eine dem Bereich 41 entgegengesetzte Richtung weist. Dies ist insbesondere aus den Fign. 5 und 6 ersichtlich. Gemäß der Fig. 5 ist der Bereich 46 in ein Sackloch 47 des Trägerrohrs 2 eingesteckt. Etwa symmetrisch zu dem Sackloch 47 ist in das Trägerrohr 2 ein Zylinderstift 56 eingepreßt.

Im eingeschalteten Zustand wird der Borstenträger 11 in eine Taumel- bzw. Nutationsbewegung versetzt. Bei einer Drehrichtung 58 der Welle 35 legt sich die Haltefeder 36 an den Zylinderstift 56 an. Auf diese Weise wird eine Eigenrotation des Borstenträgers 11 durch die Verbindung des Borstenträgers 11 und des Trägerrohrs 2 über die Haltefeder 36 verhindert. Die Bewegungen des Borstenträgers 11 im Hinblick auf das Trägerrohr 2 werden durch elastische Dreh- und/oder Biegeverformung insbesondere des Federbereichs 44 der Haltefeder 36 ausgeglichen. Selbstverständlich kann der eingepreßte Zylinderstift 56 durch einen an das Trägerrohr 2 angeformten Anschlag oder ähnliche konstruktive Maßnahmen ersetzt werden.

Ein anderer Unterschied des Bürstenteils 34 nach den Fign. 3 bis 6 zu den Bürstenteilen 1, 33 nach den Fign. 1 und 2 besteht in der Ausgestaltung der einander zugeordneten Flächen des Borstenträgers 11 und des Trägerrohrs 2. Wie insbesondere aus der Fig. 3 entnommen werden kann, ist eine dem Trägerrohr 2 zugewandte Fläche 48 der Platte 12 des Borstenträgers 11 kugelförmig ausgestaltet, wobei der Kugelmittelpunkt im Scheitelpunkt 29 angeordnet ist. Des weiteren ist eine dem Borstenträger 11 zugewandte Fläche 49 des Trägerrohrs 2, wie auch eine dem Borstenträger 11 zugewandte Fläche 50 der Schale 10 kugelförmig ausgestaltet, wobei der Kugelmittelpunkt ebenfalls im Scheitelpunkt 29 angeordnet ist. Dadurch ergibt sich zwischen den einander zugewandten Flächen 48, 49, 50 ein konstanter Abstand, der sich auch im eingeschalteten Zustand, also bei einer Nutations- bzw. Taumelbewegung des Borstenträgers 11 nicht verändert.

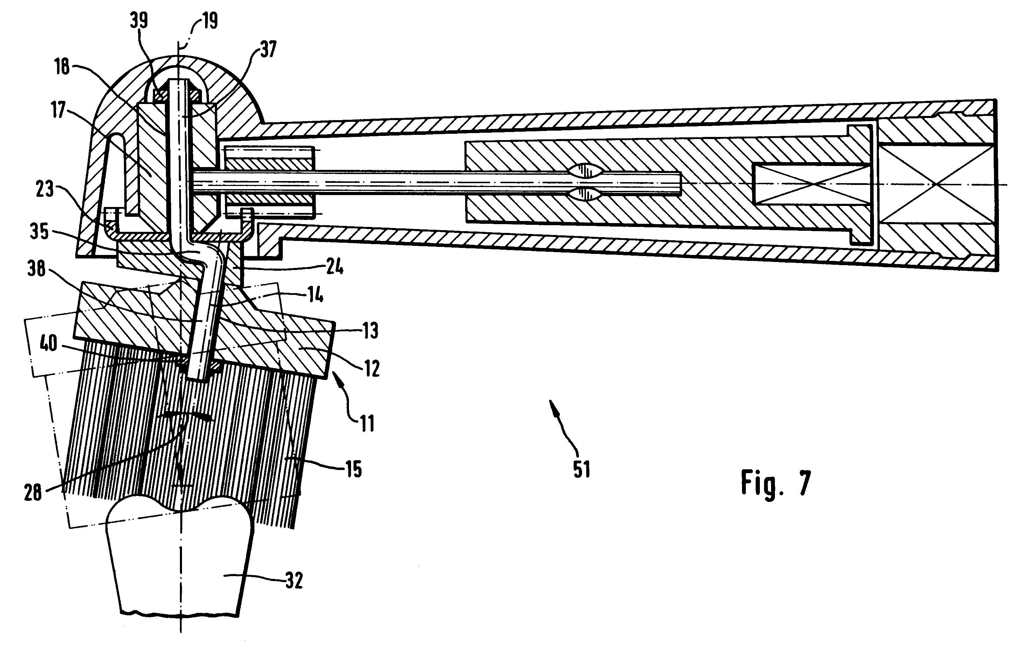

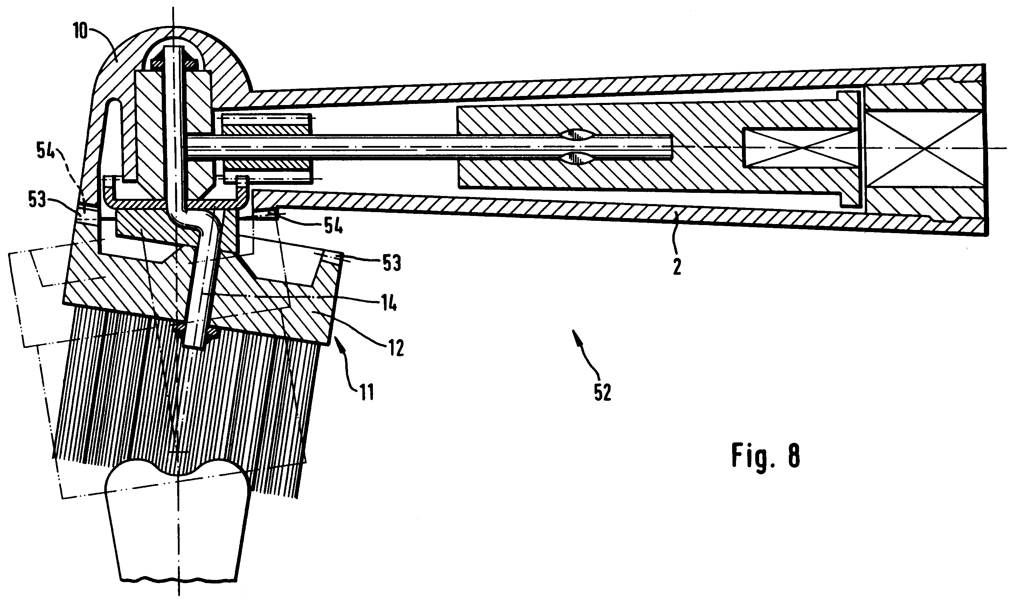

Es versteht sich, daß die im Zusammenhang mit dem Bürstenteil 34 nach der Fig. 3 beschriebene Anpassung der einander zugeordneten Flächen 48, 49, 50 des Borstenträgers 11 und des Trägerrohrs 2 bzw. der Schale 10 auch bei den Bürstenteilen 1, 33 der Fign. 1 und 2 vorgenommen werden kann. Gleiches gilt für die nachfolgend anhand der Fign. 7 und 8 beschriebenen Bürstenteile 51, 52.

Das in der Fig. 7 dargestellte Bürstenteil 51 besitzt im Unterschied zu den Bürstenteilen 1, 33, 34 der Fign. 1 bis 6 keine Mittel zur Verhinderung einer Eigenrotation des Borstenträgers 11. Es ist also weder eine Nut 30 mit einem Finger 31, noch eine Haltefeder oder dgl. vorhanden. Dies hat zur Folge, daß durch eine im eingeschalteten Zustand entstehende Reibung zwischen der Platte 12 und der Keilscheibe 24 der Borstenträger 11 in eine Drehbewegung um den Bereich 38 der Welle 35 und damit um die Bürstenachse 14 versetzt wird. Wenn der Benutzer die Borsten 15 zur Reinigung auf den Zahn 32 aufsetzt, so wird diese Eigenrotation des Borstenträgers 11 durch die Reibung auf dem Zahn 32 gebremst. Die gegebenenfalls verbleibende Eigenrotation ist dabei von der Kraft abhängig, mit der der Benutzer die Borsten 15 auf den Zahn 32 aufsetzt. Durch Anwendung einer recht hohen Kraft kann der Benutzer die Eigenrotation praktisch vollständig unterbinden. Insgesamt ergibt sich bei dem Bürstenteil 51 nach der Fig. 3 im eingeschalteten Zustand eine Nutationsbewegung mit überlagerter, freier bzw. unkontrollierter Eigenrotation des Borstenträgers 11, deren Frequenz vom ausgeübten Anpreßdruck des Benutzers abhängig ist.

Das in der Fig. 8 dargestellte Bürstenteil 52 weist anstelle der Mittel zur Verhinderung einer Eigenrotation des Borstenträgers 11 Mittel zur Erzeugung einer solchen Eigenrotation auf. Im Unterschied zu den Bürstenteilen der Fign. 1 bis 6, bei denen eine Eigenrotation nicht möglich ist, und zu dem Bürstenteil 51 der Fig. 7, bei dem eine freie bzw. unkontrollierte Eigenrotation möglich ist, ermöglicht das Bürstenteil 52 nach der Fig. 8 eine kontrollierte bzw. zwangsgesteuerte Eigenrotation des Borstenträgers 11.

Hierzu ist auf der dem Trägerrohr 2 zugewandten Seite des Borstenträgers 11 am äußeren Rand der Platte 12 eine auf 360 Grad umlaufende Kegelradverzahnung 53 vorgesehen. Des weiteren ist auf der dem Borstenträger 11 zugewandten Seite des Trägerrohrs 2 und der Schale 10 ebenfalls eine auf 360 Grad umlaufende Kegelradverzahnung 54 angeordnet. Die beiden Kegelradverzahnungen 53, 54 sind einander zugeordnet und kämmen miteinander, wobei der Eingriff der Kegelradverzahnungen 53, 54 umläuft.

Im eingeschalteten Zustand führt der Borstenträger 11 eine Taumelbewegung aus. Gleichzeitig wird durch die beiden Kegelradverzahnungen 53, 54 eine Eigenrotation des Borstenträgers 11 um die Bürstenachse 14 erzeugt. Die Drehgeschwindigkeit dieser Eigenrotation ist dabei abhängig von den Zähneverhältnissen der beiden Kegelradverzahnungen 53, 54.

## Patentansprüche

1. Bürstenteil (1, 33, 51, 52) für eine elektrische Zahnbürste, mit einem Trägerrohr (2), in dem eine um eine Längsachse (3) drehbar gelagerte Welle (7) untergebracht ist, und mit einem Borstenträger (11), mit einer Bürstenachse (14), von dem Borsten (15) abstehen, und der um eine Querachse (19) drehbar gelagert und mit der Welle (7) gekoppelt ist, wobei eine Drehbewegung der Welle (7) um die Längsachse (3) eine Bewegung des Borstenträgers (11) bezuglich der Querachse (19) bewirkt, und mit Mitteln (24, 25; 35, 38) zur Bewegung der Bürstenachse (14) des Borstenträgers (11) im wesentlichen auf einem Kegelmantel, dadurch gekennzeichnet, daß die Querachse (19) und die Bürstenachse (14) einen spitzen Winkel (28) um einen Scheitelpunkt (29) einschließen.

2. Bürstenteil nach Patentanspruch 1, dadurch gekennzeichnet, daß der Scheitelpunkt (29) außerhalb des durch die Borsten (15) gebildeten Bostenfeldes angeordnet ist.

3. Bürstenteil nach Patentanspruch 2, dadurch gekennzeichnet, daß der Scheitelpunkt (29) bei auf einen zu reinigenden Zahn (32) aufgesetzten Borsten (15) innerhalb des Zahns (32) liegt.

4. Bürstenteil nach Patentanspruch 1, dadurch gekennzeichnet, daß der Scheitelpunkt (29) innerhalb des durch die Borsten (15) gebildeten Borstenfeldes angeordnet ist, wobei der Scheitelpunkt (29) in der Nähe einer Reinigungsfläche (16) der Borsten (15) liegt.

5. Bürstenteil nach einem der Patentansprüche 1 bis 4, dadurch gekennzeichnet, daß der Winkel (28) einen Wert in einem Bereich von etwa 2 Grad bis etwa 14 Grad aufweist, insbesondere etwa 6 Grad bis etwa 10 Grad, bevorzugt etwa 3 Grad bis etwa 5 Grad.

6. Bürstenteil nach einem der Patentansprüche 1 bis 5, dadurch gekennzeichnet, daß die Welle (7) ein drehfest verbundenes Zahnrad, insbesondere Ritzel (20) oder dergleichen trägt, das ein um die Querachse (19) drehbar gelagertes Zahnrad, insbesondere Kronenrad (23) oder dergleichen kämmt.

7. Bürstenteil nach Patentanspruch 6, dadurch gekennzeichnet, daß ein Lagerstift (21) in dem Trägerrohr (2) drehbar gelagert ist, der mit dem Kronenrad (23) oder dgl. drehfest verbunden ist.

8. Bürstenteil nach Patentanspruch 6, dadurch gekennzeichnet, daß eine insbesonders gekröpfte Welle (35), insbesondere aus gebogenem Rundmetall vorgesehen ist, die mit einem Bereich (37) drehfest mit dem Kronenrad (23) oder dgl. verbunden und in dem Trägerrohr (2) drehbar gelagert ist.

9. Bürstenteil nach einem der Patentansprüche 7 oder 8, dadurch gekennzeichnet, daß der Borstenträger (11) über eine Keilscheibe (24) mit dem Kronenrad (23) oder dgl. verbunden ist.

10. Bürstenteil nach einem der Patentansprüche 7 bis 9, dadurch gekennzeichnet, daß der Borstenträger (11) mittels eines weiteren Lagerstifts (25) oder mittels eines anderen Bereichs (38) der Welle (35) drehbar gelagert ist.

11. Bürstenteil nach einem der Patentansprüche 1 bis 10, dadurch gekennzeichnet, daß Mittel (30, 31) vorgesehen sind, die eine Drehbewegung des Borstenträgers (11) um die Borstenachse (14) verhindern.

12. Bürstenteil nach Patentanspruch 11, dadurch gekennzeichnet, daß das Trägerrohr (2) eine radial zur Borstenachse (14) verlaufende Nut (30) aufweist, in die ein vom Borstenträger (11) abstehender Finger (31) eingreift.

13. Bürstenteil nach Patentanspruch 11, dadurch gekennzeichnet, daß die Mittel als Haltefeder, Gelenkhebel, Schnüre, sonstige Elastomerteile oder dgl. ausgebildet sind.

14. Bürstenteil nach Patentanspruch 13, dadurch gekennzeichnet, daß die Haltefeder (36) zwei etwa rechtwinklig abgebogene Bereiche (41, 46) sowie einen dazwischenliegenden Federbereich (44) aufweist.

15. Bürstenteil nach Patentanspruch 14, dadurch gekennzeichnet, daß die Haltefeder (36) aus einem Metalldraht besteht und die beiden Bereiche (41, 46) der Haltefeder (36) in Sacklöcher (42, 47) des Borstenträgers (11) und des Trägerrohrs (2) eingesteckt sind.

16. Bürstenteil nach einem der Patentansprüche 1 bis 10, dadurch gekennzeichnet, daß Mittel (53, 54) vorgesehen sind, die eine Drehbewegung des Borstenträgers (11) um die Bürstenachse (14) hervorrufen.

17. Bürstenteil nach Patentanspruch 16, dadurch gekennzeichnet, daß das Trägerrohr (2) und der Borstenträger (11) jeweils eine Kegelradverzahnung (53, 54) aufweisen, die miteinander kämmen.

18. Bürstenteil nach einem der Patentansprüche 1 bis 17, dadurch gekennzeichnet, daß die einander zugeordneten Flächen (48, 49, 50) des Trägerrohrs (2) und des Borstenträgers (11) gleichartig gewölbt sind.

19. Bürstenteil nach Patentanspruch 18, dadurch gekennzeichnet, daß die Fläche (48) des Borstenträgers (11), die Fläche (49) des Trägerrohrs (2) und gegebenenfalls eine Fläche (50) einer mit dem Trägerrohr (2) verbundenen Schale (10) kugelförmig ausgestaltet sind und einen gemeinsamen Kugelmittelpunkt aufweisen.

20. Bürstenteil nach Patentanspruch 19, dadurch gekennzeichnet, daß der Kugelmittelpunkt im Scheitelpunkt (29) angeordnet ist.

21. Elektrische Zahnbürste mit einem ankuppelbaren, insbesondere aufsteckbaren Bürstenteil (1, 51, 52) nach einem der vorhergehenden Patentansprüche.

22. Elektrische Zahnbürste nach Patentanspruch 21, dadurch gekennzeichnet, daß ein kontinuierlich rotierender Antrieb vorgesehen ist.

## Claims

1. A brush section (1, 33, 51, 52) for an electric toothbrush, with a mounting tube (2) in which a shaft (7) rotary about a longitudinal axis (3) is received, and with a bristle carrier (11) having a brush axis (14) and bristles (15) extending therefrom and being rotary about a transverse axis (19) and coupled to the shaft (7), with a rotational motion of the shaft (7) about the longitudinal axis (3) effecting a motion of the bristle carrier (11) relative to the transverse axis (19), and with means (24, 25; 35, 38) for moving the brush axis (14) of the bristle carrier (11) essentially on the envelope of a cone, **characterized in that** the transverse axis (19) and the brush axis (14) define between them an acute angle (28) about an apex (29).

2. The brush section as claimed in patent claim 1, **characterized in that** the apex (29) is arranged outside the boundaries defined by the bristles (15).

3. The brush section as claimed in patent claim 2, **characterized in that** the apex (29) lies inside a tooth (32) when the bristles (15) are engaged against said tooth (32) for cleaning.

4. The brush section as claimed in patent claim 1, **characterized in that** the apex (29) is arranged within the boundaries defined by the bristles (15), said apex (29) lying in the proximity of a cleansing face (16) of the bristles (15).

5. The brush section as claimed in any one of the patent claims 1 to 4, **characterized in that** the angle (28) has a value in a range from 2 to 14 degrees, approximately, in particular from 6 to 10 degrees, approximately, and preferably from 3 to 5 degrees, approximately.

6. The brush section as claimed in any one of the patent claims 1 to 5, **characterized in that** the shaft (7) carries a gear, in particular a pinion (20) or the like, which is connected with said shaft in a in a non-rotating relationship and is in meshing engagement with a gear, in particular a contrate gear (23) or the like that is rotary about the transverse axis (19).

7. The brush section as claimed in patent claim 6, **characterized in that** a bearing pin (21) is rotatably carried in the mounting tube (2), said bearing pin being connected with the contrate gear (23) or the like in a non-rotating relationship.

8. The brush section as claimed in patent claim 6, **characterized in that** an in particular bent shaft (35) fabricated particularly from a bent piece of round metal is provided, said shaft having a section (37) thereof connected with the contrate gear (23) or the like in a non-rotating relationship and being rotatably carried in the mounting tube (2).

9. The brush section as claimed in any one of the patent claims 7 or 8, **characterized in that** the bristle carrier (11) is connected with the contrate gear (23) or the like through a tapered disk (24).

10. The brush section as claimed in any one of the patent claims 7 to 9, **characterized in that** the bristle carrier (11) is rotatably mounted by means of a further bearing pin (25) or by means of another section (38) of the shaft (35).

11. The brush section as claimed in any one of the patent claims 1 to 10, **characterized in that** means (30, 31) are provided to prevent rotation of the bristle carrier (11) about the brush axis (14).

12. The brush section as claimed in patent claim 11, **characterized in that** the mounting tube (2) includes a groove (30) extending radially to the brush axis (14) and being engaged by a finger (31) protruding from the bristle carrier (11).

13. The brush section as claimed in patent claim 11, **characterized in that** said means are configured as a retaining spring, a hinged lever, strings, other elastomer parts or the like.

14. The brush section as claimed in patent claim 13, **characterized in that** the retaining spring (36) includes two approximately right-angled portions (41, 46) as well as a spring portion (44) in-between.

15. The brush section as claimed in patent claim 14, **characterized in that** the retaining spring (36) is made of a piece of metal wire, and that the two portions (41, 46) of the retaining spring (36) are inserted in respective blind-end holes (42, 47) of the bristle carrier (11) and the mounting tube (2).

16. The brush section as claimed in any one of the patent claims 1 to 10, **characterized in that** means (53, 54) are provided which produce a rotation of the bristle carrier (11) about the brush axis (14).

17. The brush section as claimed in patent claim 16, **characterized in that** the mounting tube (2) and the bristle carrier (11) include each a respective bevel gearing (53, 54) which are in meshing engagement with one another.

18. The brush section as claimed in any one of the patent claims 1 to 17, **characterized in that** the relatively associated surfaces (48, 49, 50) of the mounting tube (2) and of the bristle carrier (11) are domed in like manner.

19. The brush section as claimed in patent claim 18, **characterized in that** the surface (48) of the bristle carrier (11), the surface (49) of the mounting tube (2) and, where applicable, a surface (50) of a cap structure (10) connected with the mounting tube (2) are of a spherical configuration and have a common sphere center.

20. The brush section as claimed in patent claim 19, **characterized in that** the sphere center is arranged in the apex (29).

21. An electric toothbrush having a brush section (1, 51, 52) adapted to be coupled, in particular push-fitted thereto, as claimed in any one of the preceding patent claims.

22. The electric toothbrush as claimed in patent claim 21, **characterized in that** a continuously rotating drive mechanism is provided.

## Revendications

1. Elément de brossage (1, 33, 51, 52) pour une brosse à dents électrique, comportant un tube porteur (2) dans lequel est installé un arbre (7) monté, de façon à pouvoir tourner, autour d'un axe longitudinal (3), et comportant un support de poils (11), présentant un axe de brosse (14), dont des poils (15) font saillie et qui est monté de façon à pouvoir tourner autour d'un axe transversal (19) et qui est accouplé à l'arbre (7), dans lequel un mouvement de rotation de l'arbre (7) autour de l'axe longitudinal (3) provoque un mouvement du support de poils (11) par rapport à l'axe transversal (19), et comportant des moyens (24, 25; 35, 38) pour le mouvement de l'axe de brosse (14) du support de poils (11) sensiblement sur une enveloppe conique, caractérisé en ce que l'axe transversal (19) et l'axe de brosse (14) forment un angle aigu (28) autour d'un point sommital (29).

2. Elément de brossage suivant la revendication 1, caractérisé en ce que le point sommital (29) est agencé en dehors de la zone de poils formée par les poils (15).

3. Elément de brossage suivant la revendication 2, caractérisé en ce que, lorsque des poils (15) sont appliqués sur une dent (32) à nettoyer, le point sommital (29) est situé dans la dent (32).

4. Elément de brossage suivant la revendication 1, caractérisé en ce que le point sommital (29) est agencé dans la zone de poils formée par les poils (15), le point sommital (29) étant situé au voisinage d'une surface de nettoyage (16) des poils (15).

5. Elément de brossage suivant l'une des revendications 1 à 4, caractérisé en ce que l'angle (28) présente une valeur dans la plage d'approximativement 2 degrés jusqu'à approximativement 14 degrés, en particulier d'approximativement 6 degrés jusqu'à approximativement 10 degrés, de préférence d'approximativement 3 degrés à approximativement 5 degrés.

6. Elément de brossage suivant l'une des revendications 1 à 5, caractérisé en ce que l'arbre (7) porte une roue dentée, en particulier un pignon (20) ou un élément semblable, reliée fixement en rotation et qui entre en prise avec une roue dentée, en particulier une roue en couronne (23) ou un élément semblable, montée de façon à pouvoir tourner autour de l'axe transversal (19).

7. Elément de brossage suivant la revendication 6, caractérisé en ce qu'une broche de palier (21) est montée de façon à pouvoir tourner dans le tube porteur (2) qui est relié fixement en rotation à la roue en couronne (23) ou à l'élément semblable.

8. Elément de brossage suivant la revendication 6, caractérisé en ce qu'il est prévu un arbre (35) en particulier coudé, en particulier en métal rond plié, qui est relié de façon fixe en rotation à la roue en couronne (23) ou à un élément semblable par une zone (37) et qui est monté de façon à pouvoir tourner dans le tube porteur (2).

9. Elément de brossage suivant l'une des revendications 7 et 8, caractérisé en ce que le support de poils (11) est relié par une plaque en coin (24) à la roue en couronne (23) ou à un élément semblable.

10. Elément de brossage suivant l'une des revendications 7 à 9, caractérisé en ce que le support de poils (11) est monté, de façon à pouvoir tourner, au moyen d'une autre broche de palier (25) ou au moyen d'une autre zone (38) de l'arbre (35).

11. Elément de brossage suivant l'une des revendications 1 à 10, caractérisé en ce que sont prévus des moyens (30, 31) qui empêchent un mouvement de rotation du support de poils (11) autour de l'axe de brosse (14).

12. Elément de brossage suivant la revendication 11, caractérisé en ce que le tube porteur (2) présente une rainure (30) qui s'étend radialement par rapport à l'axe de brosse (14) et dans laquelle entre en prise une excroissance (31) qui fait saillie du support de poils (11).

13. Elément de brossage suivant la revendication 11, caractérisé en ce que les moyens sont réalisés sous la forme d'un ressort de retenue, d'un lever articulé, de cordons, d'autres éléments en élastomère ou d'autres éléments semblables.

14. Elément de brossage suivant la revendication 13, caractérisé en ce que le ressort de retenue (36) présente deux zones (41, 46) pliées approximativement à angle droit ainsi qu'une zone de ressort (44) située là entre.

15. Elément de brossage suivant la revendication 14, caractérisé en ce que le ressort de retenue (36) est constitué par un fil métallique et en ce que les deux zones (41, 46) du ressort de retenue (36) sont enfoncées dans des trous borgnes (42, 47) du support de poils (11) et du tube porteur (2).

16. Elément de brossage suivant l'une des revendications 1 à 10, caractérisé en ce que sont prévus des moyens (53, 54) qui provoquent un mouvement de rotation du support de poils (11) autour de l'axe de brosse (14).

17. Elément de brossage suivant la revendication 16, caractérisé en ce que le tube porteur (2) et support de poils (11) présentent chacun une denture de roue conique (53, 54) qui entrent en prise l'une avec l'autre.

18. Elément de brossage suivant l'une des revendications 1 à 17, caractérisé en ce que les surfaces (48, 49, 50) associées l'une à l'autre du tube porteur (2) et du support de poils (11) sont bombées de même manière.

19. Elément de brossage suivant la revendication 18, caractérisé en ce que la surface (48) du support de poils (11), la surface (49) du tube porteur (2) et, le cas échéant, une surface (50) d'une coque (10) raccordée au tube porteur (2) sont façonnées en forme sphérique et présentent un centre de sphère commun.

20. Elément de brossage suivant la revendication 19, caractérisé en ce que le centre de sphère est agencé au point sommital (29).

21. Brosse à dents électrique comportant un élément de brossage (1, 51, 52), qui peut être accouplé, en particulier qui peut être enfiché, suivant l'une des revendications précédentes.

22. Brosse à dents électrique suivant la revendication 21, caractérisée en ce qu'il est prévu un entraînement qui tourne en continu.
